# FASCICULE DE BREVET EUROPEEN

(11) **EP 0 838 013 B1**
(45) Date de publication et mention de la délivrance du brevet: **01.03.2000**
(21) Numéro de dépôt: 96924949.9
(22) Date de dépôt: 05.07.1996
(51) Int. Cl.: F25B 35/04, B01J 3/04, F16J 12/00

(54) **BOUILLEUR-ABSORBEUR A SORBANT SOLIDE, PROCEDE POUR SA FABRICATION ET DISPOSITIF FRIGORIFIQUE L'UTILISANT**
AUSTREIBER-ABSORBER MIT FESTEM SORPTIONSMITTEL, VERFAHREN ZU DESSEN HERSTELLUNG UND DENSELBEN VERWENDENDE KÄLTEVORRICHTUNG
SOLID-SORBENT BOILER-ABSORBER APPARATUS, METHOD FOR MAKING SAME AND REFRIGERATING DEVICE USING SAID APPARATUS

(30) Priorité: 07.07.1995 FR 9508261
(43) Date de publication de la demande: 29.04.1998
(73) Titulaire: MANUFACTURE DE VETEMENTS PAUL BOYE S.A., 34200 Sète (FR)
(72) Inventeur: BOYE, Philippe, F-34200 Sète (FR); HEINRY, Didier, Claude, Joseph, Félix, F-66330 Saleilles (FR)
(74) Mandataire: Colas, Jean-Pierre
(86) Numéro de dépôt international: FR9601059
(87) Numéro de publication internationale: WO9703328

(56) Documents cités:
- EP-A- 0 260 217
- EP-A- 0 283 544
- EP-A- 0 323 247
- EP-A- 0 353 850
- EP-A- 0 410 884
- WO-A-92/20954
- WO-A-94/23253
- FR-A- 1 356 673
- FR-A- 1 414 309
- US-A- 2 338 712
- US-A- 3 321 347
- US-A- 4 778 073

## Description

L'invention concerne un procédé de fabrication d'une unité contenant une matière active solide, utile pour la production de froid, l'unité ainsi obtenue et un dispositif frigorigène comportant au moins une telle unité.

On connaît de nombreux systèmes de production de froid basés sur la réaction d'une matière solide active, telle qu'un sel métallique, avec un gaz, tel que l'ammoniac, ou bien sur la désorption d'un gaz, tel que le gaz carbonique ou l'ammoniac, préalablement adsorbé et/ou absorbé dans une matière solide, telle que du charbon actif, des fibres de carbone actives, des zéolites, du graphite expansé etc ...

Dans les réalisations pratiques de ces systèmes, la matière active solide est, en général, disposée à l'état plus ou moins tassée dans un récipient ou enceinte métallique relié par un conduit aux autres composants du système. En fonctionnement, les frigories générées dans la matière active sont transmises d'abord au récipient puis, de là, au fluide (air, par exemple) à refroidir par des éléments d'échange de chaleur, tels que des ailettes métalliques, montés sur le récipient. Ce genre de structures est thermiquement assez peu efficace car le transfert des frigories de la matière active vers le récipient se fait mal par suite d'un contact physique médiocre entre la surface interne du récipient et la matière active qu'il contient. Il existe donc le besoin d'une unité contenant une matière solide active utile pour la production de froid présentant des performances améliorées.

Une unité comprenant un corps de matière active solide utile pour la production de froid, et un récipient tenant la pression, muni des moyens de raccordement, contenant ledit corps, ainsi qu'un procédé de fabrication d'une telle unité, consistant à former d'abord le récipient et à le remplir ensuite de la matière active, est connu du document WO 94/23253. Ce document FR-A-1 356 673 divulgue un procédé de fabrication d'un moteur de roquette dans lequel un récipient est formé directement sur un corps préformé de combustible.

L'invention vise notamment à fournir un procédé de fabrication d'une telle unité améliorée.

L'invention est basée sur le concept consistant à former le récipient directement autour de la matière active, plutôt que de former d'abord le récipient et de le remplir ensuite de la matière active.

Plus précisément, l'invention concerne un procédé de fabrication d'une unité comprenant un récipient tenant la pression pourvu d'au moins un orifice de raccordement, et une matière solide active utile pour la production de froid contenue dans ledit récipient, caractérisé en ce qu'on forme le récipient directement sur un corps préformé de matière active, ledit récipient étant réalisé en un matériau ayant une conductivité thermique supérieure à 18 W/m.°K.

Le récipient peut être réalisé par diverses techniques, telles que l'encapsulation, mais est, de préférence, formé par les techniques de l'enroulement filamentaire.

La technique de l'enroulement filamentaire est bien connue et a été développée, il y a plus de 20 ans, par la NASA. Cette technique est couramment utilisée pour produire divers articles tels que des bouteilles à air comprimé pour plongeurs ou des tubes. Cette technique consiste à enrouler autour d'une forme formant mandrin un filament ou ruban continu, par exemple en fibre de verre, fibre de carbone, fibre d'aramide, fibre céramique, ou fibre métallique, usuellement pré-imprégné d'un liant approprié tel qu'une résine à l'état B durcissable, par exemple une résine de polyester, une résine époxy, une résine de polyamide, une résine de silicone, ou une résine phénolique, puis, une fois l'enroulement terminé, à durcir la résine pour former l'article désiré. En variante, le filament peut être revêtu d'une résine durcissable juste avant son enroulement sur le mandrin ou bien encore on peut enrouler un filament "sec" et imprégner sous pression l'article résultant par de la résine liante, et enfin durcir la résine. Une autre variante, consiste à utiliser une résine thermoplastique auquel cas la consolidation de l'article nécessite l'application de chaleur et pression. L'enroulement peut être du type circonférentiel, polaire ou hélicoïdal ou combiner deux ou plusieurs de ces types.

De nombreux articles et brevets traitant de l'enroulement filamentaire sont disponibles dans la littérature publiée, et divers machines et matériaux pour le mettre en oeuvre sont disponibles dans le commerce. Il ne paraît donc pas nécessaire de décrire ici plus en détail cette technique.

Aux fins de l'invention, toutefois, il convient de choisir un couple filament/liant qui forme un matériau composite ayant une bonne conductivité thermique, à savoir supérieure à 18W/m. °K, cette valeur correspondant à peu près à la conductivité thermique de l'acier.

Pour atteindre cet objectif, on peut par exemple utiliser un filament de carbone ou de métal, de préférence de carbone, et une résine liante durcissable chargée de particules ou paillettes métalliques, par exemple d'aluminium, ou de carbone ou graphite. On préfère, toutefois, utiliser un liant tout carboné.

Comme indiqué plus haut, une des particularités originales de l'invention réside dans la formation du récipient directement autour d'un corps préformé de matière active solide. Dans le cas où le réservoir est réalisé par la technique préférée de l'enroulement filamentaire, ledit corps préformé sert de mandrin recevant le filament pendant l'enroulement de ce dernier.

Le corps préformé peut être constitué de toute matière solide réactive ou adsorbante, utilisée dans un système de production de froid. Des exemple de matières solides adsorbantes sont du graphite expansé, du charbon actif, des fibres de carbone activées, des zéolites, etc ... . Des exemples de matières solides réactives sont des halogénures métalliques, tels que le chlorure de baryum, le chlorure de manganèse, le chlorure de nickel et le chlorure de calcium ; des carbonates, des sulfates et nitrates de métaux, des oxydes, etc ... pris isolément ou en mélange entre eux ou avec une matière activatrice, telle que du graphite expansé, recomprimé ou non.

Ces matières actives peuvent adsorber, ou réagir avec des gaz ou vapeur tels que l'ammoniac, les amines, le méthanol, l'éthanol, le gaz carbonique, les anhydrides sulfureux et sulfurique, etc ... .

Des exemples de matières actives et de systèmes de production de froid peuvent être trouvés dans FR-A-2 626 496, FR-A- 2 642 509, EP-A1-0 129 473, WO-A-91/15292, entre autres.

Le corps de matière active doit, bien évidemment présenter une cohésion suffisante pour supporter le processus d'enroulement. Divers liants sont utilisables à cet effet, mais on a trouvé que du graphite expansé recomprimé, tel que décrit dans EP-A-0 129 473, constituait un liant excellent, favorisant en outre la réaction matière active/gaz.

L'enroulement du filament sur le corps formant matière étant habituellement effectuée avec le filament sous une certaine tension, le récipient finalement obtenu exerce une pression notable sur le corps, assurant du même coup un excellent contact physique et thermique entre la surface interne du récipient et la matière y contenue.

L'invention concerne aussi l'unité selon la revendication 5. Dans cette unité le récipient est constitué d'un enroulement filamentaire bon conducteur de la chaleur, de préférence d'un enroulement de fibre de carbone, dont les divers tours ou spires sont liés entre eux par un liant thermoconducteur formant matrice pour le filament, de façon à former une matière composite ayant une conductivité thermique supérieure à 18 W/m. °K.

L'unité de l'invention peut facultativement comporter des composants supplémentaires. Ainsi pour améliorer les échanges de chaleur avec le fluide à refroidir, l'unité peut être équipée, sur la surface extérieure du récipient, d'organes d'échange de chaleur à grande surface, tels que des ailettes, en matériau bon conducteur de la chaleur et, éventuellement d'une enveloppe périphérique isolante entourant lesdits organes, les organes et l'enveloppe délimitant, avec la paroi du réservoir, un ou plusieurs canaux pour le passage du fluide à refroidir. Les organes par exemple des ailettes, peuvent être fixés sur le récipient en les positionnant sur l'enroulement filamentaire avant de durcir le liant, de façon à obtenir finalement un ensemble unité/organes d'un seul bloc.

Si désiré, l'enveloppe périphérique isolante peut aussi être formée par la technique de l'enroulement filamentaire ou bien peut être réalisée séparément et être montée ensuite autour des organes d'échange thermique.

Egalement, l'unité peut être munie de moyens de diffusion poreux ou perforés noyés dans la matière active et destinés à faciliter la circulation du gaz dans la masse de matière active.

Enfin, l'unité peut être pourvue de moyens de chauffage, tels qu'une résistance chauffante électrique, destinés à permettre la régénération de l'unité après une phase de production de froid.

Il est à noter toutefois que l'unité peut aussi être régénérée par un moyen de chauffage externe, par exemple par passage d'un courant de fluide (gazeux ou liquide) chaud autour de l'unité.

L'unité de l'invention, qui comporte un récipient en matériau composite, est beaucoup plus légère qu'une unité similaire dont le récipient serait en acier inoxydable, le gain de poids, en ce qui concerne le récipient, étant de l'ordre d'un facteur 4.

La description qui va suivre faite en regard des dessins annexés fera bien comprendre l'invention.

Sur les dessins :
- la figure la est une vue schématique en coupe axiale d'une première unité selon l'invention ;
- la figure 1b est une vue schématique en coupe transversale, selon la ligne Ib-Ib de la figure 1a, de cette première unité.
- la figure 2 est une vue schématique en coupe axiale d'une seconde unité selon l'invention ;
- la figure 3 est une vue schématique en plan d'un dispositif frigorigène mettant en oeuvre des unités selon l'invention, une des demi-coques formant le boîtier de ce dispositif étant enlevée, et
- la figure 4 est une vue schématique en coupe partielle transversale de ce dispositif.

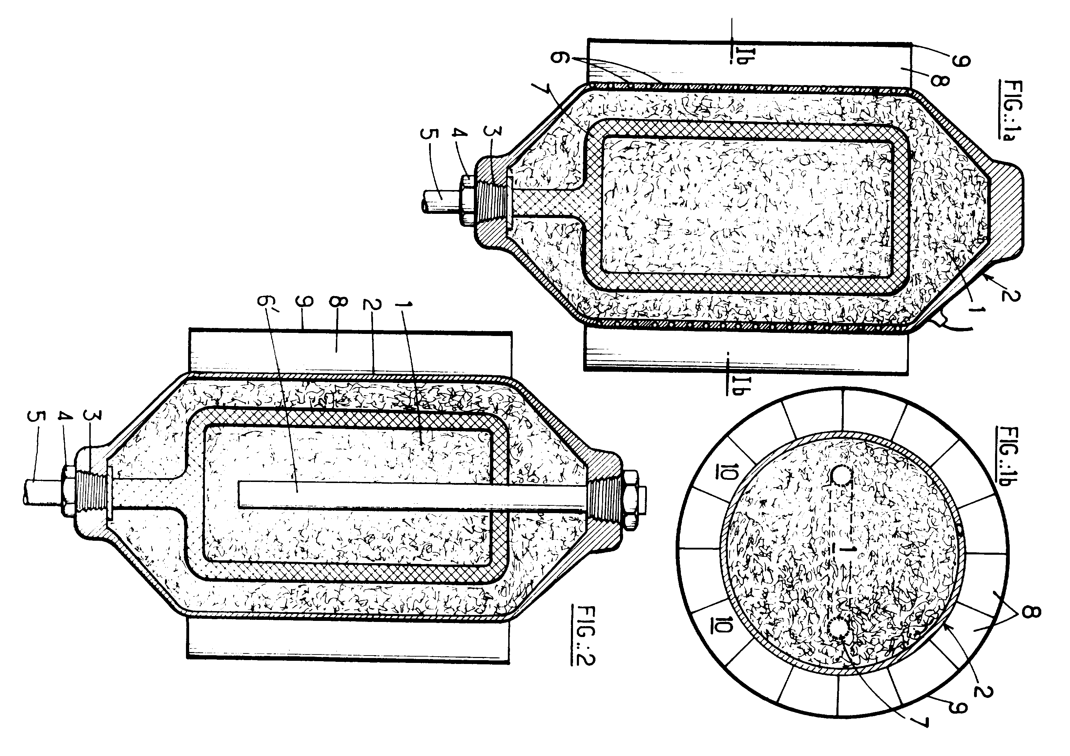

Les figures 1a et 1b montrent un premier mode de réalisation d'une unité selon l'invention. Cette unité comprend un corps ou bloc de matière active 1 et un récipient 2 formé par enroulement d'un fibre de carbone préimprégnée d'un liant carbone durcissable autour de ce corps, puis durcissement par réticulation du liant. L'épaisseur de la paroi du récipient 2 doit être suffisante pour que le récipient tienne la pression à laquelle il peut être soumis en utilisation et qui peut atteindre plusieurs dizaines de bars, selon le cas. Le récipient comporte un orifice fileté 3 permettant d'y visser un raccord 4 pour le raccordement de l'unité à d'autres composants d'un dispositif frigorigène via un conduit 5. Le récipient illustré incorpore, dans l'épaisseur de sa paroi, une résistance chauffante électrique optionnelle 6. Un diffuseur 7 tubulaire perforé est avantageusement noyé dans la matière active 1 pour faciliter le cheminement du gaz de l'orifice de raccordement vers les parties les plus éloignées de la matière active. L'unité comprend encore des ailettes longitudinales 8 en carbone fixées perpendiculairement à la surface externe du récipient, et une enveloppe cylindrique 9 en matière isolante, par exemple en matière plastique, disposée autour des ailettes, la surface externe du boîtier, l'enveloppe 9 et les ailettes 8 délimitant des canaux 10 destinés à être parcourus par le fluide à refroidir. La matière active 1 peut être l'une quelconque des matières actives, connues comme utilisables pour la production de froid.

La figure 2 illustre une unité similaire à celle de la figure 1, si ce n'est que la résistance chauffante optionnelle 6, au lieu d'être noyée dans la paroi du récipient, se présente sous la forme d'une tige chauffante 6' disposée axialement dans le corps de matière active.

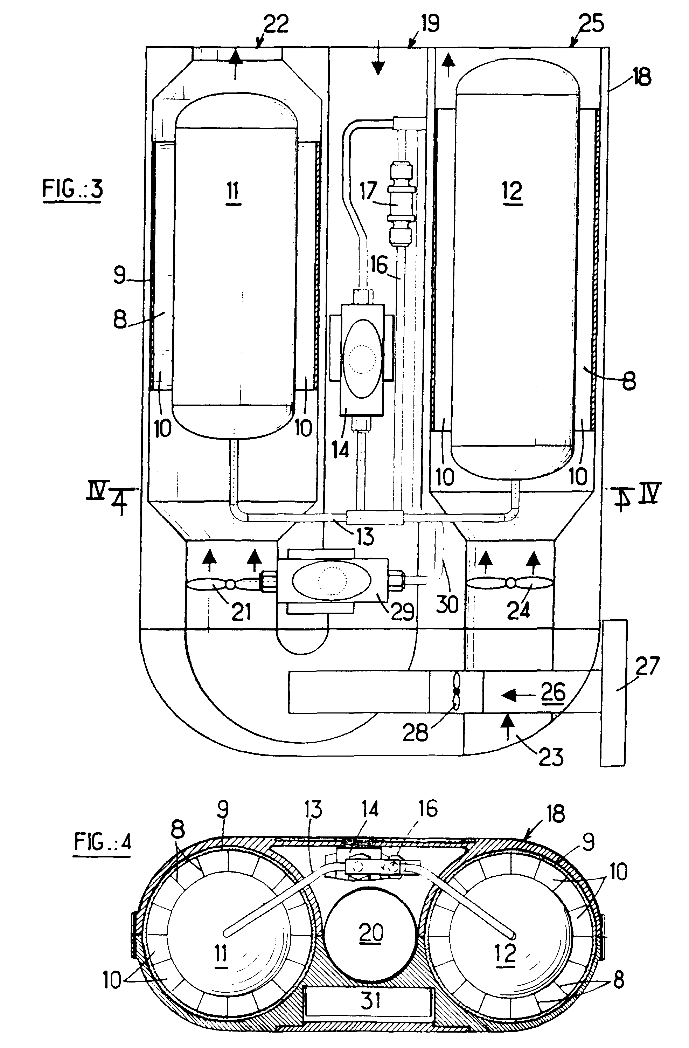

Les figures 3 et 4 illustrent un dispositif climatiseur portatif destiné à être connecté à un vêtement, tel qu'une combinaison ou veste, devant être porté dans un environnement "chaud", afin de le "climatiser".

Ce dispositif comporte deux unités selon l'invention à savoir une unité "froide" 11 et une unité "chaude" 12. L'unité froide est remplie, par exemple, d'un mélange de graphite expansé et de chlorure de baryum que l'on a fait réagir préalablement avec de l'ammoniac pour former du BaCl₂, 8 NH₃ solide maintenu sous pression dans le récipient de l'unité 1. Ce produit est capable de se décomposer endothermiquement en BaCl₂ et NH₃ (gazeux) lorsqu'on relâche la pression.

L'unité chaude 12, qui se trouve sous une pression inférieure à celle régnant dans l'unité 11, est remplie d'un mélange de graphite expansé et de chlorure de manganèse capable de réagir exothermiquement avec l'ammoniac dégagé provenant de l'unité 11 lorsque ces deux unités sont reliées entre elles.

Les unités 11 et 12 ont une structure semblable à l'unité de la figure 2, l'unité 12 étant, toutefois, d'une taille supérieure à celle de l'unité 11, la capacité du MnCl₂ à absorber par réaction NH₃ étant moindre que celle du BaCl₂.

L'unité 11 peut être mise en communication avec l'unité 12 par le moyen du conduit 13 et une vanne 14 montée sur ce conduit. Un conduit 16 équipé d'un clapet anti-retour 17 est monté en dérivation de la vanne 14.

Les unités 11 et 12 sont montées dans un boîtier 18 en matière plastique, par exemple en deux parties démontables. Ce boîtier comporte une entrée 19 pour de l'air recyclé, relativement chaud, provenant du vêtement climatisé (non représenté). Cet air recyclé passe d'abord dans un tube 20 rempli d'un agent desséchant (gel de silice par exemple), traverse un premier ventilateur 21 et est envoyé dans les canaux 10 d'échange de chaleur de l'unité 11 où il est refroidi avant d'être réinjecté dans le vêtement climatisé à partir de la sortie 22. Le boîtier comporte également une entrée 23 d'air ambiant. L'air ambiant pénétrant en 23 est aspiré par un deuxième ventilateur 24, passé dans les canaux 10 d'échange de chaleur de l'unité 12 en vue de refroidir cette dernière, puis sort dans l'atmosphère en 25. Le boîtier comporte aussi une deuxième entrée 26 d'air ambiant, qui peut, facultativement, être précédée d'une cartouche NBC (Nucléaire - Bactériologique - Chimique) 27, et un troisième ventilateur 28. L'air entrant en 26 est aspiré par le ventilateur 28, et est mélangé au courant d'air recyclé, venant compenser les pertes d'air de climatisation qui se produisent dans le vêtement, l'air de climatisation étant habituellement maintenu en surpression par rapport à la pression atmosphérique.

Le dispositif comprend aussi une vanne de purge 29, normalement fermée, dont une des extrémités est reliée au conduit 13 par un conduit 30 et dont l'autre extrémité débouche à l'atmosphère. Il comprend enfin une batterie 31 servant à alimenter les divers ventilateurs, les connexions électriques entre la batterie et les ventilateurs n'étant pas représentées pour des raisons de clarté de représentation.

Pour produire du froid, l'unité 11, qu'on suppose remplie sous pression du produit CaCl₂, 8NH₃, est connectée à l'unité 12 en ouvrant la vanne 14 et en réglant cette vanne pour ajuster le débit d'ammoniac et, donc, l'importance de la production de froid par l'unité 11.

L'ammoniac dégagé réagit exothermiquement avec le chlorure de manganèse de l'unité 12, d'où le besoin de refroidir l'unité 12 par un courant d'air ambiant venant de l'entrée 23.

Lorsque l'unité 11 se trouve épuisée, on peut la régénérer en chauffant l'unité 12 par le moyen de la résistance chauffante 6', en reliant cette dernière à une source de courant électrique. Les vannes 14 et 15 ayant été fermées au préalable, l'ammoniac, qui s'était combiné au chlorure de manganèse lors du cycle de production de froid, se dissocie de ce dernier, passe dans le conduit 13, puis dans le conduit 16 via le clapet 17, en direction de l'unité 11 où il se recombine au chlorure de baryum. L'unité 11 est alors prête pour une nouvelle utilisation.

La vanne de purge 29 sert à la maintenance du système ainsi qu'à la vidange des unités, lorsque cela est désiré.

Le dispositif de l'invention se prête à une réalisation compacte et peut être inclus facilement dans un sac à dos.

## Revendications

1. Procédé de fabrication d'une unité comprenant un récipient tenant la pression pourvu d'au moins un orifice de raccordement, et une matière solide active utile pour la production de froid contenue dans ledit récipient, caractérisé en ce qu'on forme le récipient directement sur un corps préformé de matière active, ledit récipient étant réalisé en un matériau ayant une conductivité thermique supérieure à 18 W/m.°K.

2. Procédé selon la revendication 1, caractérisé en ce que le récipient est formé par enroulement filamentaire.

3. Procédé selon la revendication 2, caractérisé en ce qu'on enroule un filament de carbone.

4. Procédé selon la revendication 3, caractérisé en ce qu'on lie ensemble les tours ou spires du filament de carbone dans un liant carbone formant matrice.

5. Unité comprenant un corps de matière active solide utile pour la production de froid, et un récipient tenant la pression, muni de moyens de raccordement, contenant ledit corps, caractérisée en ce que ledit récipient est constitué d'un enroulement filamentaire formé directement sur ledit corps et dont les divers tours ou spires sont liés entre eux par un liant thermoconducteur formant matrice pour le filament de façon à former une matière composite ayant une conductivité thermique supérieure à 18W/m.°K.

6. Unité selon la revendication 5, caractérisée en ce que l'enroulement filamentaire est en carbone.

7. Unité selon la revendication 5 ou 6, caractérisée en ce que le liant est en carbone.

8. Unité selon la revendication 5, 6 ou 7, caractérisée en ce que l'unité comprend, en outre, sur la surface extérieure du récipient, des organes d'échange de chaleur.

9. Unité selon la revendication 8, caractérisée en ce que lesdits organes sont des ailettes.

10. Unité selon la revendication 8 ou 9, caractérisée en ce qu'une enveloppe périphérique thermoisolante est prévue autour des organes d'échange de chaleur.

11. Unité selon l'une quelconque des revendications 5 à 10, caractérisée en ce que qu'elle comprend, en outre, une résistance électrique chauffante.

12. Unité selon l'une quelconque des revendications 5 à 11, caractérisée ce que qu'elle comprend, en outre, des moyens de diffusion poreux ou perforés noyés dans la matière active solide.

13. Dispositif de production de froid caractérisé en ce qu'il comporte au moins une unité telle que définie à l'une quelconque des revendications 5 à 12.

## Patentansprüche

1. Verfahren zur Herstellung einer Einheit, bestehend aus einem Druck haltenden Behälter mit mindestens einer Anschlußöffnung und einem in diesem Behälter angeordneten, für die Kälteerzeugung geeigneten aktiven festen Material, dadurch gekennzeichnet, daß man den Behälter direkt auf einem vorgeformten Körper aus aktivem Material formt, wobei dieser Behälter aus einem Werkstoff mit einer Wärmeleitfähigkeit von über 18 W/m.°K hergestellt ist.

2. Verfahren nach Anspruch 1, dadurch gekennzeichnet, daß der Behälter durch Fadenwicklung geformt wird.

3. Verfahren nach Anspruch 2, dadurch gekennzeichnet, daß man einen Kohlenstoffaden wickelt.

4. Verfahren nach Anspruch 3, dadurch gekennzeichnet, daß man die Windungen des Kohlenstoffadens in einem eine Matrix bildenden Kohlenstoffbindemittel miteinander verbindet.

5. Einheit, bestehend aus einem Körper aus einem für die Kälteerzeugung geeigneten aktiven festen Material und einem diesen Körper enthaltenden, Druck haltenden Behälter mit Anschlußmitteln, dadurch gekennzeichnet, daß der Behälter aus einer Fadenwicklung besteht, die direkt auf diesem Körper geformt ist und deren einzelne Windungen miteinander durch ein wärmeleitendes Bindemittel verbunden sind, das eine Matrix für den Faden bildet, so daß ein Verbundmaterial mit einer Wärmeleitfähigkeit von über 18W/m.°K gebildet wird.

6. Einheit nach Anspruch 5, dadurch gekenzeichnet, daß die Fadenwicklung aus Kohlenstoff besteht.

7. Einheit nach Anspruch 5 oder 6, dadurch gekennzeichnet, daß das Bindemittel aus Kohlenstoff besteht.

8. Einheit nach Anspruch 5, 6 oder 7, dadurch gekennzeichnet, daß die Einheit außerdem auf der Außenfläche des Behälters Wärmeaustauschorgane aufweist.

9. Einheit nach Anspruch 8, dadurch gekennzeichnet, daß diese Organe Rippen sind.

10. Einheit nach Anspruch 8 oder 9, dadurch gekennzeichnet, daß um die Wärmeaustauschorgane herum eine wärmeisolierende Umfangshülle vorgesehen ist.

11. Einheit nach einem der Ansprüche 5 bis 10, dadurch gekennzeichnet, daß sie außerdem einen elektrischen Heizwiderstand aufweist.

12. Einheit nach einem der Ansprüche 5 bis 11, dadurch gekennzeichnet, daß sie außerdem poröse oder perforierte Diffusionsmittel aufweist, die in das aktive feste Material eingebettet sind.

13. Vorrichtung zur Kälteerzeugung, dadurch gekennzeichnet, daß sie mindestens eine Einheit nach einem der Ansprüche .5 bis 12 aufweist.

## Claims

1. A process for the manufacture of a unit including a pressure-resistant container provided with at least one connecting orifice, and an active solid material useful for producing cold contained in said container, characterized in that the container is formed directly on a preformed body of active material, the said container being made of a material which has a thermal conductivity higher than 18 W/m.K.

2. The process as claimed in claim 1, characterized in that the container is formed by filament winding.

3. The process as claimed in claim 2, characterized in that a carbon filament is wound.

4. The process as claimed in claim 3, characterized in that the turns or coils of the carbon filament are bonded together in a carbon binder forming a matrix.

5. A unit including a body of solid active material which can be used for producing cold, and a pressure-resistant container provided with coupling means, containing said body, characterized in that said container is comprised of a filament winding made directly on said body and the various turns or coils of which are bonded together by a thermoconductive binder forming a matrix for the filament so as to form a composite material which has a thermal conductivity higher than 18 W/m.K.

6. The unit as claimed in claim 5, characterized in that the filament winding is made of carbon.

7. The unit as claimed in claim 5 or 6, characterized in that the binder is made of carbon.

8. The unit as claimed in claim 5, 6 or 7, characterized in that the unit additionally includes heat exchange members on the external surface of the container.

9. The unit as claimed in claim 8, characterized in that the said members are fins.

10. The unit as claimed in claim 8 or 9, characterized in that a thermally insulating peripheral casing is provided around the heat exchange members.

11. The unit as claimed in any one of claims 5 to 10, characterized in that it additionally includes an electrical resistance heater.

12. The unit as claimed in any one of claims 5 to 11, characterized in that it additionally includes porous or perforated diffusing means which are embedded in the solid active material.

13. A device for producing cold, characterized in that it comprises at least one unit as defined in any one of claims 5 to 12.
